# EUROPEAN PATENT APPLICATION

(11) **EP 2 492 859 A2**
(43) Date of publication of application: **29.08.2012**
(21) Application number: 12157018.8
(22) Date of filing: 24.02.2012
(51) Int. Cl.: G06Q 10/06, G07C 1/10

(54) **System for representing locations of persons in a structure**

(30) Priority: 28.02.2011 US 201113036969
(71) Applicant: Honeywell International, Inc., Morristown, NJ 07962-2245 (US)
(72) Inventor: Gu, Ji, Morristown, NJ 07962-2245 (US); Zhang, Tingting, Morristown, NJ 07962-2245 (US); Chen, Henry, Morristown, NJ 07962-2245 (US); Lau, Peter, Morristown, NJ 07962-2245 (US); Huseth, Steve D., Morristown, NJ 07962-2245 (US); Plocjer, Tom, Morristown, NJ 07962-2245 (US)
(74) Representative: Buckley, Guy Julian

(57) **Abstract**

A computer-based system is configured to receive data relating to locations and identities of a plurality of persons in a structure, and display on an output device a plurality of icons representing the locations in the structure and the identities of one or more of an individual person and a group of persons.

## Description

### Technical Field

The present disclosure relates to representing locations of persons in a structure.

### Background

One of the highest priority technological needs of first responders or other emergency personnel is to be able to locate one another in a structure during an incident. As sensor and wireless technologies for determining location become more reliable, there is an increasing need to provide innovative and intuitive displays to assist an incident commander in visualizing the location of his emergency personnel, such as firefighters, in a structure.

### Brief Description of the Drawings

**FIG.1** **is** an example embodiment of an output display of a system for locating people in a structure.
**FIGS. 2A - 2E** illustrate a feature of merging people in an output display.
**FIG. 3** illustrates an output wherein a person has been selected and details about that person are displayed in an information panel.
**FIG. 4** illustrates an output that tracks a person in a structure.
**FIG. 5** is a flowchart of an example embodiment of a process to represent locations of persons in a structure.
**FIG. 6** is a block diagram of a computer system upon which one or more embodiments of the present disclosure can operate.

### Detailed Description

One or more embodiments address the issue of locating one or more persons in a structure by displaying on an output device a visualization of the structure and the people in the structure. The people can be represented by icons, with each icon representing one or more persons. These visualizations depict the persons who are dispersed on multiple floors of structures; call attention to a person who is down, the track to his or her location, and a quick safe route of evacuation; scale up to depict the locations of up to hundreds of persons, in the case of a very large incident, and in a manner that ensures the display remains uncluttered; provide for different levels of fidelity to accommodate views desired by commanders at different levels of command; and provide user tools to minimize structural occlusion that otherwise would interfere with the task of viewing the locations of the people. While the system is very useful to first responders and other emergency personnel, the system is not limited to use by such personnel, and it is useful to any person or persons who need to depict the sensed locations of large numbers of people in a structure. One or more embodiments of the present disclosure implement these features by means of several innovative concepts.

First, to represent the location of people in a structure, an embodiment uses a metaphor of a water droplet and its well-known behavior of readily merging with other water droplets to form a larger droplet or small pool of water. This metaphor allows a very intuitive depiction of location information at multiple levels of detail. At the most detailed level, small individual droplets represent locations of individual people. The size of the droplet indicates the error associated with that sensed individual location. The color of the droplet indicates a role, an assignment, or other classification in an emergency response case. In a security operation,
color could represent gender or access privileges.

Second, for a higher level, less-detailed view, an embodiment can merge individual droplets in a small area or droplets of the same color into one much larger droplet. This merged view might be particularly useful for cases in which individual locations are known with low accuracy and hence, individual point locations have much less meaning. It might also be useful where there is a desire to reduce clutter on the display. For example, displaying hundreds of individual locations would be visually overwhelming to the user. The droplet merging metaphor allows one to scale up a location display to hundreds of people without unduly cluttering the view.

Third, an embodiment also allows a user to switch back and forth between these levels of detail. The entire display can be toggled between different levels of detail, or the more detailed droplet display can be selected based on zone, floor, role, or other category. It also allows the user to drill down from the merged droplet view to the individual droplet view for a selected merged droplet.

Fourth, regardless of the level of detail currently selected, downed personnel are always shown as individual droplets together with a track to the location where they went down. From predictive algorithms for predicting safe egress and ingress in a fire emergency (an example of which is described below), a safe route to the downed person can be calculated for a response/rescue team to follow, and a safe evacuation route for removing safely the downed person can also be calculated. Both routes are displayed relative to the droplet representing the downed person. This capability to maintain the detailed droplet depiction of an individual person in alarm, regardless of the level of detail currently selected by the user, applies also to depicting persons of interest, access violators in a security operation, and persons in proximity to protected assets, and can be used to guide security personnel to intercept the person.

In an embodiment, a user of the system can customize the display. This includes the ability to display general-to-specific information (that is, the ability to drill down from an overall general scene to a specific individual) about an operation or incident and its participants. The incident scene can be displayed in a three dimensional view with the location of person in an easy to understand and customizable manner. A user can identify, group, and categorize personnel as desired. A user can customize the display according to incident scope, size, and scale. The display avoids clutter of data, icons, tracks, and maps. The system is reconfigurable to allow a user to have ready access to critical data on the fly.

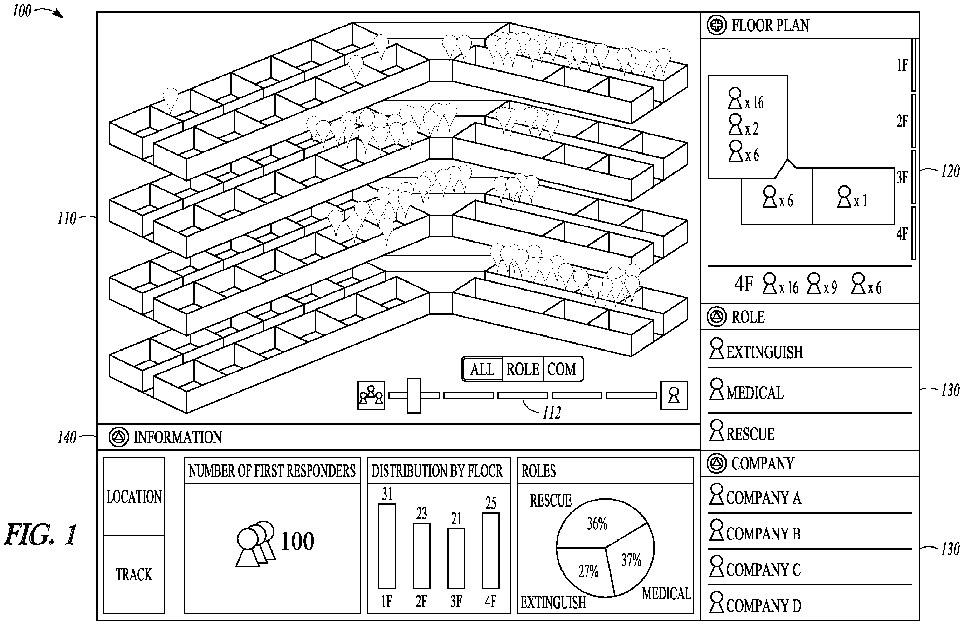

**FIG.1** is an example embodiment of an output **100** of a system for locating people in a structure. In this embodiment, the output **100** is divided into four panels---the main three dimensional panel **110,** the two dimensional thumbnail panel **120,** a group selection panel **130,** and an information panel **140.** The main panel **110** displays a three dimensional or geospatial map of the structure along with the persons' positions or tracks. The three dimensional viewport can be changed to a two dimensional floor plan to avoid occlusion and reduce clutter. The main panel **110** includes a merge bar **112,** which in this embodiment, includes five merge levels of persons' locations. People can be merged by various criteria such as by role, by company, and by gender. A user can select an icon that represents a person, or a merge block that represents a group of people, to check further details.

The thumbnail panel **120** provides a two dimensional floor plan of the buildings or maps. The panel **120** provides general information of persons' location distribution by floor. A user can select a particular zone for further details of that zone.

The group selection panel **130** provides a user the ability to select different filtering criteria such as by role, company, and gender. The information panel **140** provides relevant information in various usage contexts. The information panel **140** can also provide controls for tracking people.

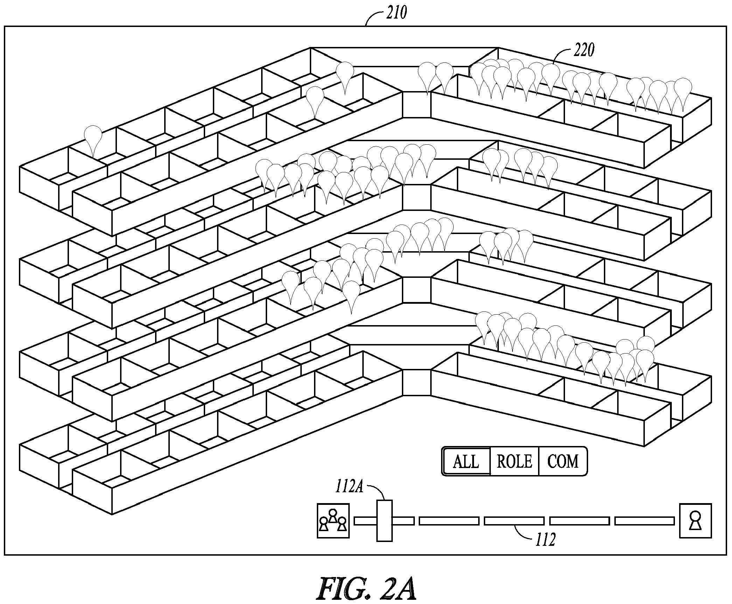

**FIGS. 2A - 2E** illustrate a feature of merging people in a display.
Specifically, **FIGS. 2A - 2E** represent a three dimensional depiction **210** of a structure and icons **220** representing people or groups of people. In **FIG. 2A****,** each icon **220** represents an individual person. In an embodiment, the icons can be color coded to represent different roles. For example, in an emergency responder situation, orange can be used to indicate a rescuer, blue can be used to indicate a fireman, and green can be used to indicate a medical person. A user can use the slider bar **112,** which is currently positioned on position **112A,** to change the merge level.

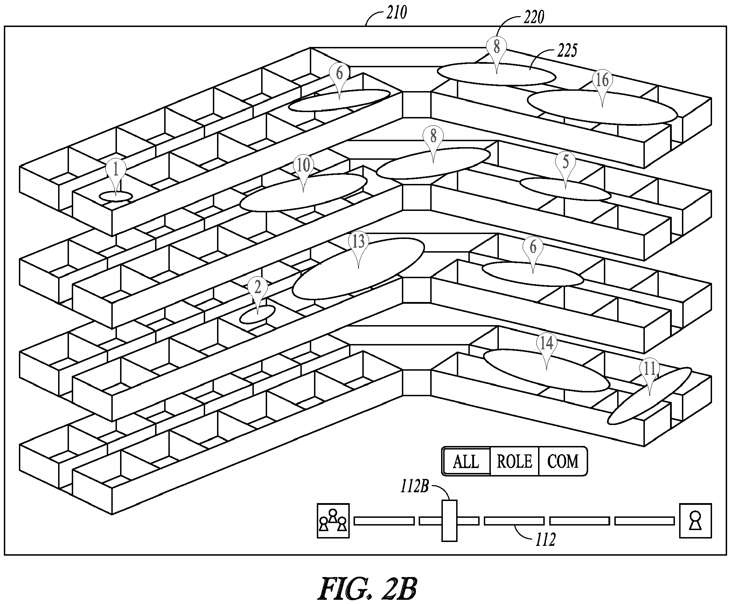

**FIG. 2B** indicates a second merge level. As can be seen in **FIG. 2B****,** the merge bar **112** has been moved to the second position **112B.** As further illustrated in **FIG. 2B****,** individuals have been merged into groups **225,** and the number of people in each group is displayed in an icon **220** connected to the group **225.** The location of the merged unit is the physical center of the groups' location. In an embodiment, if all the people in a group are of the same role, the group icon is color-coded to that role. If there are people in a group of different roles, then a different color (one that does not represent any particular role) is used for that group icon.

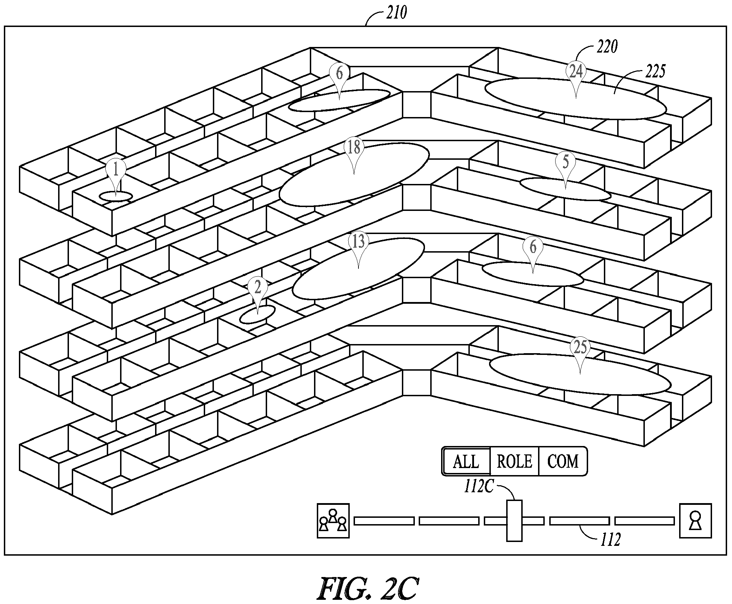

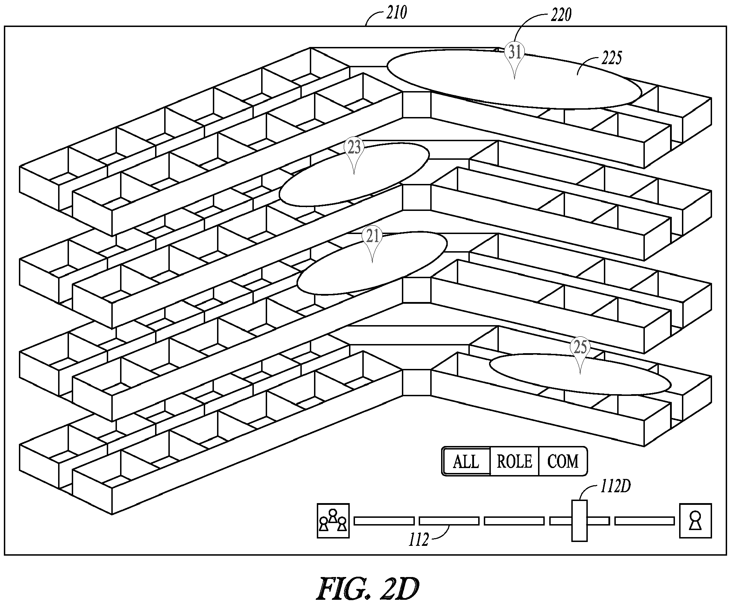

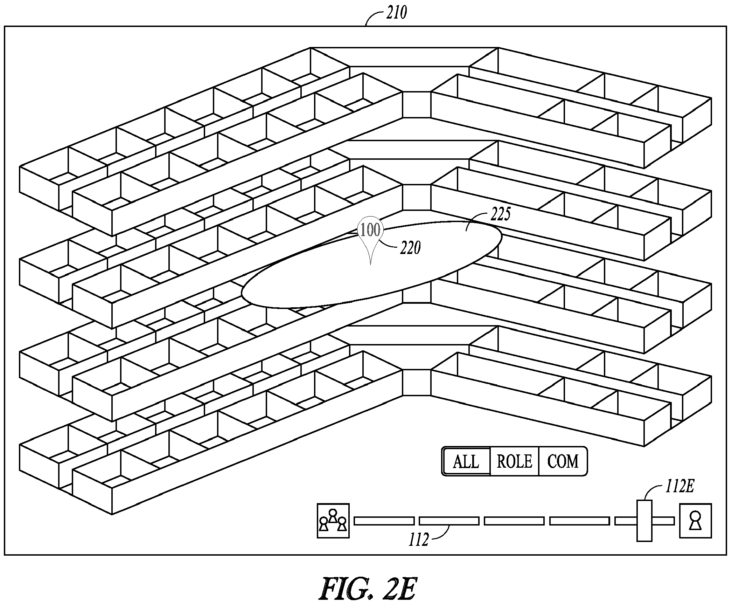

**FIG. 2C** indicates a third merge level. As can be seen in **FIG. 2C****,** the merge bar 112 has been moved to the third position **112C.** **FIG. 2C** illustrates a merger of persons according to zones that the people are in, or according to their physical location and the distances between each other. **FIG. 2D** illustrates a fourth merge level. As can be seen in **FIG. 2D****,** the merge bar **112** has been moved to the fourth position **112D,** and **FIG. 2D** illustrates the merging of persons in the structure based on the different floors of the structure. **FIG. 2E** illustrates a fifth merge level. As can be seen in **FIG. 2E****,** the merge bar **112** has been moved to the fifth position **112E,** and **FIG. 2E** illustrates the merging of persons in the structure based on the entire structure.

In addition to merging individuals into a group and merging smaller groups into larger groups, a system user can break up a merged unit to view individuals or sub-groups of the larger merged unit, and the system user can select that all persons of a particular role within a group be highlighted. If such persons are part of a merged group that contains individuals that are not part of this role, the number of persons in the group of that role can be highlighted and indicated.

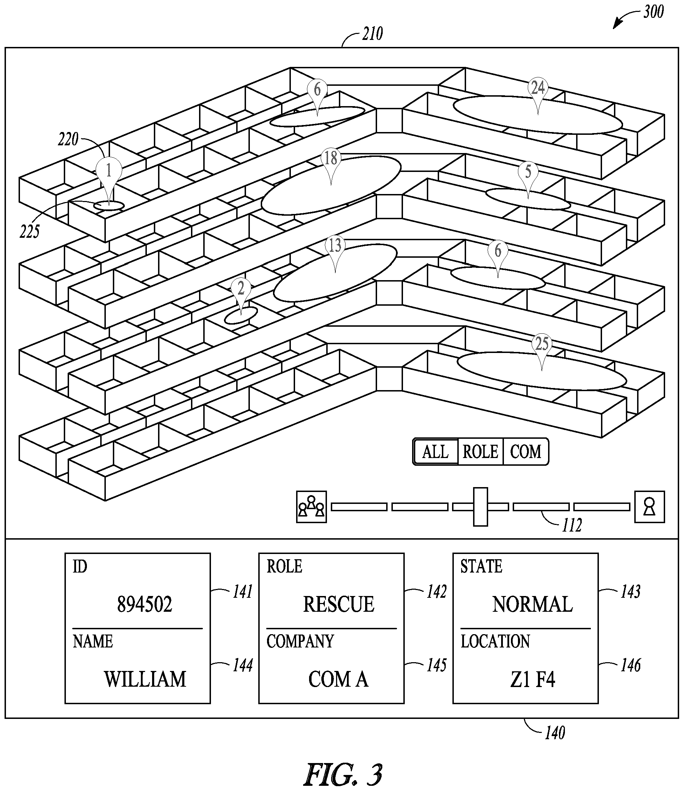

**FIG. 3** illustrates an output **300** wherein a person **220** has been selected and details about that person are displayed in an information panel **140.** In an embodiment, a user can select a person by clicking on the icon **220** on the three dimensional viewport. The selection causes detailed information about the person to be displayed in the information panel **140** such as the person's identification number **141,** his role **142,** his state **143,** his name **144,** his company **145,** and his location **146.** In an embodiment, an indication can be displayed on the main panel **110,** or other panel, of a confidence level of the position **146** of the person **220.**

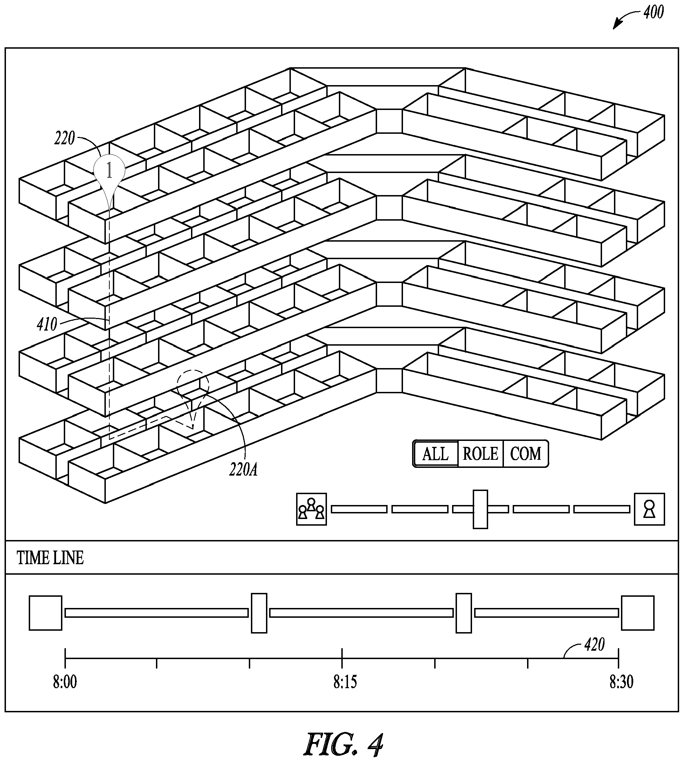

**FIG. 4** illustrates an output **400** that tracks a person in a structure.
Specifically, a user can select a person and view his track during a particular time period. The person is represented by icon **220,** and in the example of **FIG. 4****,** is tracked from a first position **220** to a second position **220A.** The person's track **410** can also be displayed. The user can select any time period by selecting that time period on the time line **420.**

In an embodiment, the output display can indicate if a person is down. This determination can be made via the use of motion/inertial sensors and/or posture sensors on the person. A rescue route from other persons to the downed person can be displayed, and an evacuation route from the downed person can be displayed.

As indicated above, a predictive algorithms can be used for predicting safe egress and ingress in a fire emergency, a safe route to the downed person can be calculated for a response/rescue team to follow, and a safe evacuation route for removing safely the downed person can also be calculated.

A fire or smoke propagation model can be utilized to detect spread paths over time of smoke or fire. The smoke propagation model can be implemented as a software module. A situation assessor evaluates, predicts and classifies safety route for evacuation of occupants using the data from active detectors and other detectors or sensors and the fire and smoke propagation model. The situation assessor can also be implemented in the context of one or more software modules. A capacity constrained route planner calculates at least one evacuation plan based on the safety routes obtained from the situation assessor. The capacity constrained route planner can also be implemented as a software module. A controller can be utilized to control the output patterns of one or more directional sound devices such as, for example, an "ExitPoint™" directional sounder, in order to communicate at least one evacuation path to the evacuees. Note that the ExitPoint™ directional sounder is a product of the "System Sensor" company headquartered in St. Charles, Ill., U.S.A. The ExitPoint™ directional sounder represents only one example of a directional sounder that can be adapted for use with the disclosed embodiments. It can be appreciated that other types of directional sounding devices can also be utilized and that the ExitPoint™ directional sounder is not a limiting feature of the embodiments. The ExitPoint™ directional sounder includes an integral audio amplifier that produces a broadband low-, mid-, and/or high-, range sound in specific pulse patterns. The ExitPoint™ directional sounders, fitted in addition to the normal building evacuation sounders, offer a technique for drawing people to evacuation routes even in perfect visibility. The ExitPoint™ directional sounder can function equally in smoke-filled environments. Triggered by existing fire detection systems, directional sounders positioned at carefully selected locations can guide building occupants along escape routes and to perimeter building exits.

When a fire or gas condition develops in a building or other structure, a plurality of visual signaling devices can be used to indicate the safety routes to the evacuees. The hazardous condition is sensed by active detectors and other detectors inside the structure. The system processes the signals from the detectors and an evacuation plan is prepared using the processed signals.

The visual signaling devices near the hazardous condition are indicated in red color in order to show the evacuees that the route is unsafe for evacuation. The visual signaling devices are indicated in yellow color in order to show the evacuees that the route is currently safe but will be unsafe soon (*e.g.*, in 1-5 minutes) for evacuation. The visual signaling devices far apart from the hazardous condition are indicated in green color in order to show the evacuees that the route is safe for evacuation. The directional sounders produce audio signals to the evacuees, based on the smoke spread paths and speeds. The evacuees can choose any route according to the visual signals indicated by visual signaling devices and audio signals produce by directional sounders.

The hazardous condition, for example a fire, can be propagated from a first region to a second region. The hazardous condition is sensed by the active detectors and other detectors inside the structure. The system processes the signals from the detectors and an evacuation plan is prepared using the processed signals.

An evacuation and safety route prediction method receiving information from a fire panel concerning currently active smoke and heat detectors. Thereafter, the system checks whether any of the detectors are active. If none of the detectors are active, the system once again checks for the activation of detectors, else the system locates the active detectors.

Thereafter, routes and exits in proximity to the active detectors can be classified as "currently unsafe" and closed for use during an evacuation. Evacuation planning can be accomplished with the remaining "safe" routes. Fires, however, are dynamic and often spread from one area to another over time. Smoke also spreads over time, often unintentionally aided by the building HVAC system. Therefore, what is a safe route now may not be a safe route in ten minutes. The system reads the information available from active detectors and fire panel, and the progression of fire and smoke and the time-dependent degradation of evacuation route safety associated with it can be predicted using a smoke or fire propagation model.

The fire/smoke propagation model can be utilized to predict the fire and smoke propagation paths using the information obtained from fire and smoke detectors. Thereafter, when the fire progresses, the routes near the smoke spread paths are predicted as soon-to-be unsafe. The remaining routes are classified as "safe". Thereafter, the safety route classification is sent to the route planner, and the system once again checks for activation status of detectors.

A smoke or fire propagation model can be used for predicting spread paths over a selected time period. The propagation model can be configured as a set of partial differential and algebraic equations that describe smoke concentration and/or temperature distribution and its changes in space and over time. The model is constructed upon fundamental principles, such as the conservation of momentum, mass and energy of smoke particles, or simplified equations with reasonable assumptions, or empirical relations.

Information regarding the location, smoke concentration and temperature of active detectors, the air flow information near active detectors due to an HVAC (Heating, Ventilation, Air-Conditioning) system, wind, etc and sprinkler activation information respectively can be provided as input to a fire or smoke propagation model. Thereafter, such a propagation model solves a set of pre-built modeling equations describing smoke or fire propagation over time. The smoke or fire spread paths over a chosen period of time are predicted.

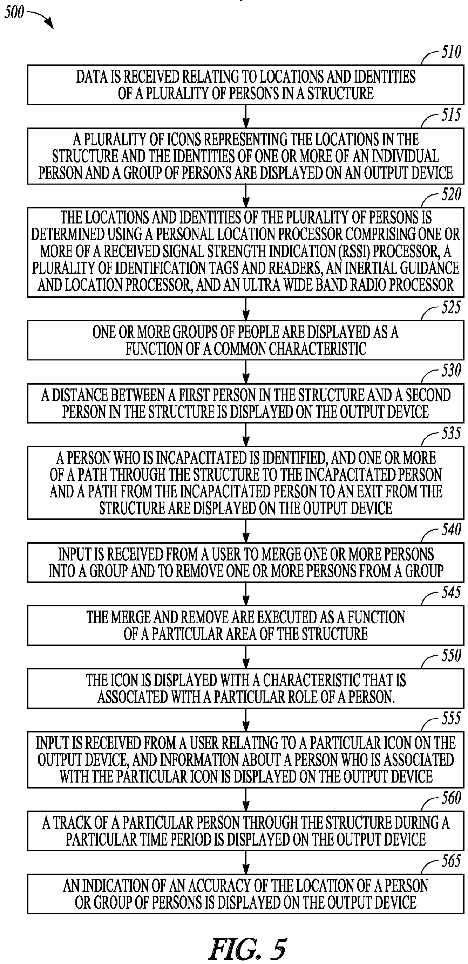

**FIG. 5** is a flowchart of an example embodiment of a process **500** to represent locations of persons in a structure. **FIG. 5** includes a number of process blocks **505 - 565.** Though arranged serially in the example of **FIG. 5****,** other examples may reorder the blocks, omit one or more blocks, and/or execute two or more blocks in parallel using multiple processors or a single processor organized as two or more virtual machines or sub-processors. Moreover, still other examples can implement the blocks as one or more specific interconnected hardware or integrated circuit modules with related control and data signals communicated between and through the modules. Thus, any process flow is applicable to software, firmware, hardware, and hybrid implementations.

Referring to **FIG. 5****,** at **510** data is received relating to locations and identities of a plurality of persons in a structure. At **515,** a plurality of icons representing the locations in the structure and the identities of one or more of an individual person and a group of persons are displayed on an output device.

At **520,** the locations and identities of the plurality of persons is determined using a personal location processor comprising one or more of a received signal strength indication (RSSI) processor, a plurality of identification tags and readers, an inertial guidance and location processor, and an ultra wide band radio processor.

At **525,** one or more groups of people are displayed as a function of a common characteristic. At **530,** a distance between a first person in the structure and a second person in the structure is displayed on the output device. At **535,** a person who is incapacitated is identified, and one or more of a path through the structure to the incapacitated person and a path from the incapacitated person to an exit from the structure are displayed on the output device.

At **540,** input is received from a user to merge one or more persons into a group and to remove one or more persons from a group. At **545,** the merge and remove are executed as a function of a particular area of the structure. At **550,** the icon is displayed with a characteristic that is associated with a particular role of a person. At **555,** input is received from a user relating to a particular icon on the output device, and information about a person who is associated with the particular icon is displayed on the output device.

At **560,** a track of a particular person through the structure during a particular time period is displayed on the output device. At **565,** an indication of an accuracy of the location of a person or group of persons is displayed on the output device.

### Example Embodiments

In Example No. 1, a system includes a computer processor. The computer processor is configured to receive data relating to locations and identities of a plurality of persons in a structure, and display on an output device a plurality of icons representing the locations in the structure and the identities of one or more of an individual person and a group of persons.

In Example No. 2, a system includes all the features of Example No. 1, and optionally includes a computer processor that is configured to determine the locations and identities of the plurality of persons using a personal location processor. The personal location processor can include one or more of a received signal strength indication (RSSI) processor, a plurality of identification tags and readers, an inertial guidance and location processor, and an ultra wide band radio processor.

In Example No. 3, the system includes all the features of Example Nos. 1-2, and optionally includes a processor that is configured to display one or more groups of people as a function of a common characteristic.

In Example No. 4, the system includes all the features of Example Nos. 1-3, and optionally includes a processor that is configured to display on the output device a distance between a first person in the structure and a second person in the structure.

In Example No. 5, the system includes all the features of Example Nos. 1-4, and optionally includes an output device that includes one or more of a three dimensional display of the structure, a two dimensional thumbnail floor plan of the structure, a panel for selecting criteria for grouping the persons, and an information panel.

In Example No. 6, the system includes all the features of Example Nos. 1-5, and optionally includes a processor that is configured to identify a person who is incapacitated, and to display on the output device one or more of a path through the structure to the incapacitated person and a path from the incapacitated person to an exit from the structure.

In Example No. 7, the system includes all the features of Example Nos. 1-6, and optionally includes a processor that is configured to receive input from a user to merge one or more persons into a group and to remove one or more persons from a group.

In Example No. 8, the system includes all the features of Example Nos. 1-7, and optionally includes a feature wherein the merge and remove are executed as a function of a particular area of the structure.

In Example No. 9, the system includes all the features of Example Nos. 1-8, and optionally includes a processor that is configured to display the icon with a characteristic that is associated with a particular role of a person.

In Example No. 10, the system includes all the features of Example Nos. 1-9, and optionally includes a processor that is configured to receive input from a user relating to a particular icon on the output device, and to display on the output device information about a person who is associated with the particular icon.

In Example No. 11, the system includes all the features of Example Nos. 1-10, and optionally includes a processor that is configured to display on the output device a track of a particular person through the structure during a particular time period.

In Example No. 12, the system includes all the features of Example Nos. 1-11, and optionally includes a processor that is configured to display on the output device an indication of an accuracy and/or confidence level of the location of a person or group of persons.

In Example No. 13, a computer readable medium includes instructions for executing a process comprising receiving data relating to locations and identities of a plurality of persons in a structure; and displaying on an output device a plurality of icons representing the locations in the structure and the identities of one or more of an individual person and a group of persons.

In Example No. 14, a computer readable medium includes the features of Example No. 13 and optionally includes instructions for determining the locations and identities of the plurality of persons using one or more of a received signal strength indication (RSSI) processor, a plurality of identification tags and readers, an inertial guidance and location processor, and an ultra wide band radio processor.

In Example No. 15, a computer readable medium includes the features of Example Nos. 13-14, and optionally includes instructions for displaying one or more groups of people as a function of a common characteristic.

In Example No. 16, a computer readable medium includes the features of Example Nos. 13-15, and optionally includes instructions for displaying on the output device a distance between a first person in the structure and a second person in the structure.

In Example No. 17, a computer readable medium includes the features of Example Nos. 13-16, and optionally includes instructions for identifying a person who is incapacitated, and for displaying on the output device one or more of a path through the structure to the incapacitated person and a path from the incapacitated person to an exit from the structure.

In Example No. 18, a computer readable medium includes the features of Example Nos. 13-17, and optionally includes instructions for receiving input from a user to merge one or more persons into a group and to remove one or more persons from a group.

In Example No. 19, a computer readable medium includes the features of Example Nos. 13-18, and optionally includes instructions for displaying the icon with a characteristic that is associated with a particular role of a person.

In Example No. 20, a computer readable medium includes the features of Example Nos. 13-19, and optionally includes instructions for displaying on the output device a track of a particular person through the structure during a particular time period.

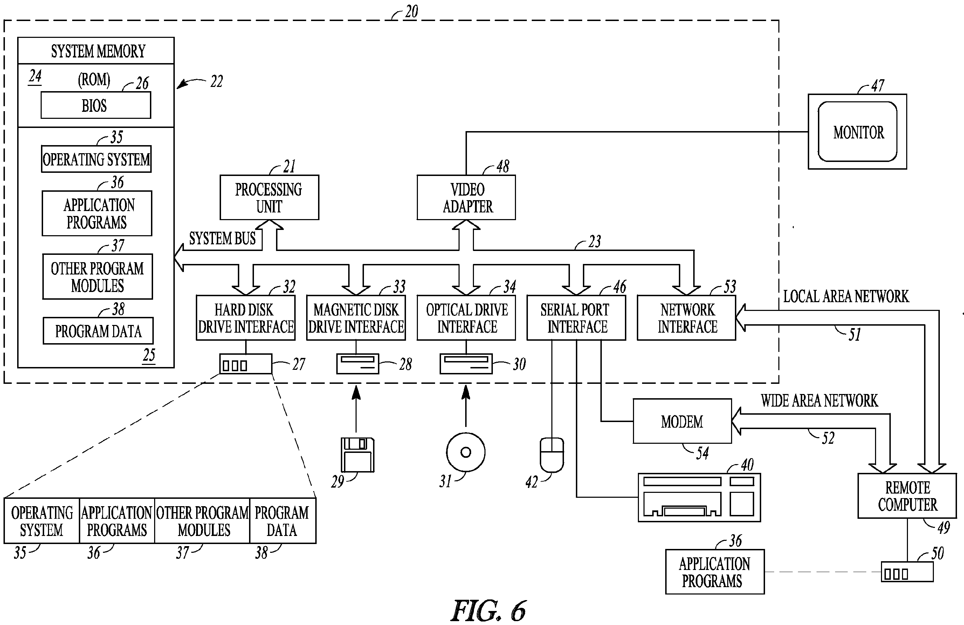

**FIG. 6** is an overview diagram of a hardware and operating environment in conjunction with which embodiments of the invention may be practiced. The description of **FIG. 6** is intended to provide a brief, general description of suitable computer hardware and a suitable computing environment in conjunction with which the invention may be implemented. In some embodiments, the invention is described in the general context of computer-executable instructions, such as program modules, being executed by a computer, such as a personal computer. Generally, program modules include routines, programs, objects, components, data structures, etc., that perform particular tasks or implement particular abstract data types.

Moreover, those skilled in the art will appreciate that the invention may be practiced with other computer system configurations, including hand-held devices, multiprocessor systems, microprocessor-based or programmable consumer electronics, network PCS, minicomputers, mainframe computers, and the like. The invention may also be practiced in distributed computer environments where tasks are performed by I/ 0 remote processing devices that are linked through a communications network. In a distributed computing environment, program modules may be located in both local and remote memory storage devices.

In the embodiment shown in **FIG. 6****,** a hardware and operating environment is provided that is applicable to any of the servers and/or remote clients shown in the other Figures.

As shown in **FIG. 6****,** one embodiment of the hardware and operating environment includes a general purpose computing device in the form of a computer **20** (*e.g.*, a personal computer, workstation, or server), including one or more processing units **21,** a system memory **22,** and a system bus **23** that operatively couples various system components including the system memory **22** to the processing unit **21.** There may be only one or there may be more than one processing unit **21,** such that the processor of computer **20** comprises a single central-processing unit (CPU), or a plurality of processing units, commonly referred to as a multiprocessor or parallel-processor environment. A multiprocessor system can include cloud computing environments. In various embodiments, computer **20** is a conventional computer, a distributed computer, or any other type of computer.

The system bus **23** can be any of several types of bus structures including a memory bus or memory controller, a peripheral bus, and a local bus using any of a variety of bus architectures. The system memory can also be referred to as simply the memory, and, in some embodiments, includes read-only memory (ROM) **24** and random-access memory (RAM) **25.** A basic input/output system (BIOS) program **26,** containing the basic routines that help to transfer information between elements within the computer **20,** such as during start-up, may be stored in ROM **24.** The computer **20** further includes a hard disk drive **27** for reading from and writing to a hard disk, not shown, a magnetic disk drive **28** for reading from or writing to a removable magnetic disk **29,** and an optical disk drive **30** for reading from or writing to a removable optical disk **31** such as a CD ROM or other optical media.

The hard disk drive **27,** magnetic disk drive **28,** and optical disk drive **30** couple with a hard disk drive interface **32,** a magnetic disk drive interface **33,** and an optical disk drive interface **34,** respectively. The drives and their associated computer-readable media provide non volatile storage of computer-readable instructions, data structures, program modules and other data for the computer **20.** It should be appreciated by those skilled in the art that any type of computer-readable media which can store data that is accessible by a computer, such as magnetic cassettes, flash memory cards, digital video disks, Bernoulli cartridges, random access memories (RAMs), read only memories (ROMs), redundant arrays of independent disks (*e.g.*, RAID storage devices) and the like, can be used in the exemplary operating environment.

A plurality of program modules can be stored on the hard disk, magnetic disk **29,** optical disk **31,** ROM **24,** or RAM **25,** including an operating system **35,** one or more application programs **36,** other program modules **37,** and program data **38.** A plug in containing a security transmission engine for the present invention can be resident on any one or number of these computer-readable media.

A user may enter commands and information into computer **20** through input devices such as a keyboard **40** and pointing device **42.** Other input devices (not shown) can include a microphone, joystick, game pad, satellite dish, scanner, or the like. These other input devices are often connected to the processing unit **21** through a serial port interface **46** that is coupled to the system bus **23,** but can be connected by other interfaces, such as a parallel port, game port, or a universal serial bus (USB). A monitor **47** or other type of display device can also be connected to the system bus **23** via an interface, such as a video adapter **48.** The monitor **47** can display a graphical user interface for the user. In addition to the monitor **47,** computers typically include other peripheral output devices (not shown), such as speakers and printers.

The computer **20** may operate in a networked environment using logical connections to one or more remote computers or servers, such as remote computer **49.** These logical connections are achieved by a communication device coupled to or a part of the computer **20;** the invention is not limited to a particular type of communications device. The remote computer **49** can be another computer, a server, a router, a network PC, a client, a peer device or other common network node, and typically includes many or all of the elements described above I/0 relative to the computer **20,** although only a memory storage device **50** has been illustrated. The logical connections depicted in **FIG. 6** include a local area network (LAN) **51** and/or a wide area network (WAN) **52.** Such networking environments are commonplace in office networks, enterprise-wide computer networks, intranets and the internet, which are all types of networks.

When used in a LAN-networking environment, the computer **20** is connected to the LAN **51** through a network interface or adapter **53,** which is one type of communications device. In some embodiments, when used in a WAN-networking environment, the computer **20** typically includes a modem **54** (another type of communications device) or any other type of communications device, *e.g.*, a wireless transceiver, for establishing communications over the wide-area network **52,** such as the internet. The modem **54,** which may be internal or external, is connected to the system bus 23 via the serial port interface **46.** In a networked environment, program modules depicted relative to the computer **20** can be stored in the remote memory storage device **50** of remote computer, or server **49.** It is appreciated that the network connections shown are exemplary and other means of, and communications devices for, establishing a communications link between the computers may be used including hybrid fiber-coax connections, T1-T3 lines, DSL's, OC-3 and/or OC-12, TCP/IP, microwave, wireless application protocol, and any other electronic media through any suitable switches, routers, outlets and power lines, as the same are known and understood by one of ordinary skill in the art.

It should be understood that there exist implementations of other variations and modifications of the invention and its various aspects, as may be readily apparent, for example, to those of ordinary skill in the art, and that the invention is not limited by specific embodiments described herein. Features and embodiments described above may be combined with each other in different combinations. It is therefore contemplated to cover any and all modifications, variations, combinations or equivalents that fall within the scope of the present invention.

The Abstract is provided to comply with 37 C.F.R. §1.72(b) and will allow the reader to quickly ascertain the nature and gist of the technical disclosure. It is submitted with the understanding that it will not be used to interpret or limit the scope or meaning of the claims.

## Claims

1. A system comprising:
a computer processor (21) configured to:
receive data relating to locations and identities of a plurality of persons in a structure; and (510)
display on an output device a plurality of icons representing the locations in the structure and the identities of one or more of an individual person and a group of persons. (515)

2. The system of claim 1, wherein the computer processor is configured to determine the locations and identities of the plurality of persons using a personal location processor comprising one or more of a received signal strength indication (RSSI) processor, a plurality of identification tags and readers, an inertial guidance and location processor, and an ultra wide band radio processor. (520)

3. The system of claim 1, wherein the processor is configured to display one or more groups of people as a function of a common characteristic. (525)

4. The system of claim 1, wherein the processor is configured to display on the output device a distance between a first person in the structure and a second person in the structure. (530)

5. The system of claim 1, wherein the processor is configured to identify a person who is incapacitated, and to display on the output device one or more of a path through the structure to the incapacitated person and a path from the incapacitated person to an exit from the structure. (535)

6. The system of claim 1, wherein the processor is configured to receive input from a user to merge one or more persons into a group and to remove one or more persons from a group. (540)

7. The system of claim 1, wherein the processor is configured to display the icon with a characteristic that is associated with a particular role of a person. (550)

8. The system of claim 1, wherein the processor is configured to display on the output device a track of a particular person through the structure during a particular time period. (560)

9. A computer readable medium comprising instructions for executing a process comprising:
receiving data relating to locations and identities of a plurality of persons in a structure; and (510)
displaying on an output device a plurality of icons representing the locations in the structure and the identities of one or more of an individual person and a group of persons. (515)

10. The computer readable medium of claim 13, comprising instructions for displaying one or more groups of people as a function of a common characteristic; (525) for identifying a person who is incapacitated, and for displaying on the output device one or more of a path through the structure to the incapacitated person and a path from the incapacitated person to an exit from the structure; (535) for receiving input from a user to merge one or more persons into a group and to remove one or more persons from a group; (545) for displaying on the output device a track of a particular person through the structure during a particular time period. (560)
